# EUROPÄISCHE PATENTSCHRIFT

(11) **EP 2 877 906 B1**
(45) Veröffentlichungstag und Bekanntmachung des Hinweises auf die Patenterteilung: **20.12.2017**
(21) Anmeldenummer: 13753535.7
(22) Anmeldetag: 12.07.2013
(51) Int. Cl.: G06F 1/16, A45C 11/00, F16M 13/00, A45C 13/02

(54) **VORRICHTUNG ZUM TRANSPORT UND HALTEN VON GEGENSTÄNDEN**
DEVICE FOR TRANSPORTING AND SUPPORTING ARTICLES
DISPOSITIF DE TRANSPORT ET DE SUPPORT D'OBJETS

(30) Priorität: 13.07.2012 DE 102012014067
(43) Veröffentlichungstag der Anmeldung: 03.06.2015
(73) Patentinhaber: reboon GmbH, 24568 Kaltenkirchen (DE)
(72) Erfinder: MESSER, Tilo, 01169 Dresden (DE); EHRIG, Thomas, 01067 Dresden (DE)
(74) Vertreter: Sander, Rolf
(86) Internationale Anmeldenummer: PCT/DE2013/000375
(87) Internationale Veröffentlichungsnummer: WO 2014/008883

(56) Entgegenhaltungen:
- US-A- 4 162 696
- US-A- 5 002 184
- US-A- 5 887 777
- US-A- 5 893 540
- US-A1- 2009 050 499
- US-B1- 8 127 382

## Beschreibung

Die Erfindung betrifft eine Vorrichtung zum Transport und Halten von Gegenständen mit einem Tragabschnitt, einem an dem Tragabschnitt zwischen einer Transport- und Arbeitsstellung der Vorrichtung schwenkbar befestigten Abdeckung und Haltemitteln zum Halten des Gegenstandes an der Abdeckung.

Eine solche Vorrichtung aus der US 5,887,777 bekannt geworden. Die dort beschriebene Transporttasche weist einen Tragabschnitt und eine schwenkbar an diesem befestigte Abdeckung auf. Die Abdeckung ist mit Teilen eines Kreppverschlusses ausgerüstet, der als Haltemittel zum Halten eines Computers in einer Arbeitsstellung dient. Abdeckung und Tragabschnitt bestehen aus einem halbsteifen Kunststoffkern, der von einer 3 mm bis 4 mm dicken Schaumstoffschicht bedeckt ist. Die Schaumstoffschicht und Kunststoffkern sind mit einem flexiblen Material aus Stoff, Leder oder dergleichen bezogen. Ferner sind Haltemittel am Tragabschnitt offenbart, die zum Halten eines Sonnenschutzes dienen.

Die US 8,127, 382 betrifft ein tragbares Kopfkissensystem. Das Kopfkissensystem besteht aus einem Tragabschnitt und einer Abdeckung, die schwenkbar miteinander verbunden sind. An dem Tragabschnitt ist ein Kopfkissen angeordnet, das aus Sicherheitsgründen mit Hilfe von Befestigungsmitteln an dem Tragabschnitt fixiert ist. Die Abdeckung weist eine Vertiefung zur Aufnahme einer Decke auf und ist mit Federmitteln ausgerüstet. Das Kopfkissensystem kann zwischen einer Arbeitsstellung und einer Transportstellung verschwenkt werden. In der Transportstellung ist das Kopfkissen in einer Tasche angeordnet, die aus Tragabschnitt und Abdeckung gebildet wird. In der Arbeitsstellung ist die federnde Abdeckung unterhalb des Tragabschnittes positioniert, so dass eine besonders weiche Unterlage für den Kopf eines Nutzers bereit gestellt ist.

Die US 5,002,184 betrifft eine Computertasche. Die Computertasche weist einen Tragabschnitt und eine Abdeckung auf, die an dem Tragabschnitt angelengt ist. Der Tragabschnitt kann daher zwischen einer Arbeitsstellung und einer Transportstellung verschwenkt werden. Die Abdeckung bildet ein Fach oder eine Ausnehmung aus, die zur Aufnahme eines Computers oder Laptops eingerichtet ist. Um den Transport sicherer zu gestalten und Bewegungen des Computers in der Ausnehmung beim Transport zu vermeiden, ragt aus der ebenen Oberfläche der Abdeckung ein Vorsprung auf, der in der Transportstellung an dem Computer anliegt und diesen in der Ausnehmung verklemmt.

Die US 2009/0050499A1 betrifft eine Schutztasche für ein Mobiltelefon.

Die in der WO 2011/007267 A1 beschriebene Vorrichtung verfügt über einen Tragabschnitt und eine Abdeckung, die an dem Tragabschnitt befestigt ist und zwischen einer Transport- und einer Arbeitsstellung verschwenkt werden kann. An der Abdeckung sind elastische Bänder als Haltemittel angebracht, so dass der Gegenstand zwischen den Bändern und der Abdeckung verklemmt werden kann.

Die US 4,162,696 beschreibt eine Schutztasche für eine Kamera, wobei die Schutztasche mit Styroporkugeln befüllt ist. Neben dem Schutz der Kamera beim Transport dient die Schutztasche auch zum sicheren Ablegen der Kamera auf gekrümmten Oberflächen.

Die US 5,893,540 betrifft eine Unterlage zum Abstellen einer Rechnertastatur. Die Unterlage ist plastisch verformbar und zur Aufnahme eines Füllmaterials vorgesehen ist. Als Füllmaterial werden Daunen oder Propylen vorgeschlagen. Zum Halten der Tastatur an der Unterlage dienen Klettverschlussbänder, von denen eines fest mit der Tastatur verbunden ist.

Die US2003-00194402 zeigt eine Arbeitsunterlage für einen Rechner. Die Arbeitsunterlage umfasst einen formfesten Tragabschnitt sowie ein Kissen unterhalb des Tragabschnittes.

Die US 5,893,540 beschreibt eine Unterlage zum Abstellen einer Rechnertastatur. Die Unterlage ist plastisch verformbar und zur Aufnahme eines Füllmaterials vorgesehen. Als Füllmaterial werden Daunen oder Propylen vorgeschlagen. Zum Halten der Tastatur an der Unterlage dienen Klettverschlussbänder, von denen eines fest mit der Tastatur verbunden ist.

Die DE 20 2010 004 897 U1 offenbart ein Arbeitskissen, das keilartig ausgebildet und zum Halten und Ausrichten von Computern, Notebooks, Tablet PCs und dergleichen vorgesehen ist. Hierzu sind auf dem Arbeitskissen Klettbänder angebracht, die zum Fixieren einer formstabilen Ablage dienen, auf welcher beispielsweise ein Laptop in gewünschter Schräglage, abgestellt werden kann. Die formstabile Ablage ist jedoch sperrig und erzeugt darüberhinaus nur im Zusammenspiel mit zusätzlichen Spann- oder Befestigungselementen eine ausreichende Haftwirkung.

Aus der DE 20 2008 005552 U1 ist eine Haftmatte bekannt. Die dort offenbarte Haftmatte weist eine einstückige Schaumstoffmatte aus Polyurethan auf. Durch das Andrücken des Schaumstoffs an eine glatte Oberfläche wird eine Haftwirkung erzielt. Die besagte Haftwirkung entfaltet sich an beiden Seiten der Haftmatte, so dass Gegenstände mit glatten Oberflächen wie beispielsweise Mobiltelefone, Brillen, Zigarrenschachteln oder dergleichen auf einem im Wesentlichen ebenfalls glatten Armaturenbrett eines Kraftfahrzeuges fixiert werden können. Die Haftwirkung der bekannten Haftmatte wird jedoch ausschließlich zwischen glatten Oberflächen bereitgestellt.

Weiterhin sind Tragebehältnisse wie Koffer, Taschen, Hüllen oder dergleichen bekannt, die zur Aufnahme empfindlicher elektronischer Gegenstände eingerichtet sind. Hierzu zählen beispielsweise Kameras, Laptops, eBook-Reader, Handys, Tablet-PCs. Die aus der Praxis bekannten Vorrichtungen dienen jedoch in erster Linie zur Aufnahme des Gegenstandes und zum Ermöglichen oder Vereinfachen seines Transports. Darüber hinaus stellen einige der bekannten Vorrichtungen ein Schutz vor Verschmutzung oder vor mechanischen Stößen bereit. Darüber hinaus weisen bekannte Vorrichtungen zusätzliche Fächer, die zur Aufnahme von Netzgeräten, Kabeln, Dokumenten oder dergleichen dienen und so die Attraktivität dieser Produkte für den Nutzer steigern.

Aufgabe der Erfindung ist es, eine Vorrichtung der eingangs genannten Art zu schaffen, die einen verbesserten Halt des Gegenstandes in der Arbeitsstellung insbesondere auf abgerundeten Oberflächen bereitstellt.

Die Erfindung löst diese Aufgabe durch ein an dem Tragabschnitt befestigtes Haltekissen, das in der Transportstellung innerhalb einer aus Tragabschnitt und Abdeckung gebildeten Tasche und in der Arbeitsstellung unterhalb des Tragabschnittes angeordnet ist, wobei das Haltekissen wenigstens einen Verbindungsbereich aufweist, mit dem das Haltekissen an dem Tragabschnitt befestigt ist, wobei jeder Verbindungsbereich mit einem so großen Abstand zu einander gegenüberliegenden Seiten der Außenkontur des Haltekissens angeordnet ist, dass an dem Tragabschnitt sackartig befestigte Haltekissenrandbereiche ausgebildet sind.

Erfindungsgemäß ist eine Vorrichtung vorgesehen, die zum Transportieren von Gegenständen, wie beispielsweise Computern, Laptops, eBook-Readern und insbesondere Tablet PCs vorgesehen ist. Erfindungsgemäß ist nicht nur ein Schutz für die Vorrichtung beim Transport geschaffen. Darüber hinaus ermöglicht die Erfindung auch eine stabile Halterung des Gegenstandes nicht nur auf flachen Auflageflächen sondern auch auf abgerundeten Auflagen. Bei solchen abgerundeten Auflagen handelt es sich beispielsweise um den Oberschenkel des Nutzers. Ein Benutzer kann den Gegenstand somit transportieren und bei Bedarf den transportierten Gegenstand auf seinem Oberschenkel abstellen, wobei das Haltekissen einen Halt bereitstellt. Der Nutzer kann somit seine beiden Hände frei für beliebige Tätigkeiten nutzen. Die Haltewirkung des Haltekissens ist im Rahmen der Erfindung ausreichend groß, um dem Nutzer Sicherheit hinsichtlich der Stabilität der Halterung zu geben. Das Haltekissen ist im Rahmen der Erfindung in der Transportstellung in der aus Tragabschnitt und Abdeckung gebildeten Tasche angeordnet und stellt einen Schutz vor einer mechanischen Beschädigung des zu transportierenden Gegenstandes bereit. In der Arbeitsstellung ist das Haltekissen unterhalb des Tragabschnittes also an der vom den Haltemitteln abgewandten Seite des Tragabschnitts angeordnet.

Erfindungsgemäß ist das Haltekissen in einem Verbindungsbereich an dem Tragabschnitt befestigt. Dieser Verbindungsbereich weist eine Kontur auf, die im Rahmen der Erfindung grundsätzlich beliebig sein kann. Wesentlich ist jedoch, dass ausreichend leicht verformbare äußere Haltekissenrandbereiche ausgebildet sind. In der Arbeitsstellung, in der das Haltekissen unterhalb des Tragabschnitts angeordnet ist, werden die sackartigen Haltekissenrandbereiche von der Schwerkraft zunächst nach unten gezogen, wobei sie auf der abgerundeten Auflage, beispielsweise der Oberschenkel des Nutzers, locker aufliegen. Auf Grund der fehlenden Befestigung nehmen insbesondere die Haltekissenrandbereiche in Folge einer Hin- und Herbewegung der Vorrichtung entlang der abgerundeten Auflage leicht die zum Halt notwendige formkomplementäre Konfiguration ein. Die Haltekissenradbereiche sind insbesondere bei Haltekissen mit geringer Dicke vorteilhaft, da sie die Verformbarkeit des ansonsten nur wenig verformbaren schmalen Kissens erhöhen. Der Abstand des Verbindungsbereichs zu der einen Seite der Außenkontur des Haltekissen kann gleich oder unterschiedlich zum Abstand sein, den der Verbindungsbereich zur der Außenkontur der gegenüberliegenden Seite des Haltekissen aufweist. Durch Verschwenken der Abdeckung an dem Tragabschnitt in die Transportstellung liegt der Tragabschnitt mit seiner Innenseite an einer Innenseite der Abdeckung an. Das Arbeitskissen, das ebenfalls an der Innenseite des Tragabschnittes befestigt ist, ist somit zwischen der Abdeckung und dem Tragabschnitt angeordnet und somit innerhalb der aus Tragabschnitt und Abdeckung gebildeten Tasche. Auf diese Weise wird der in der Tasche transportierte Gegenstand durch das Haltekissen vor Stößen oder sonstigen mechanischen Beschädigungen geschützt.

Zweckmäßigerweise ist das Haltekissen leicht verformbar und legt sich in der Arbeitsstellung beim Abstellen der Vorrichtung auf eine Auflage in Folge einer Bewegung der Vorrichtung formkomplementär an die Auflage an, so dass eine formschlüssige Verbindung zwischen Auflage und Haltekissen bereit gestellt ist. Die zum Halten erforderliche seitliche Stabilität wird bei dieser Weiterentwicklung durch eine formschlüssige Verbindung zwischen Auflage und Haltekissen bereit gestellt. Ist die Auflage beispielsweise ein Oberschenkel eines Benutzers, also eine abgerundete Auflage, wird das Haltekissen ein Stück weit entlang des Oberschenkels des Nutzers bewegt. Dadurch passt sich das befüllte Kissen seinem Untergrund an. Die Kügelchen im Kissen werden durch den stabilen, auf das Kissen wirkenden Körper, verdrängt und passen sich somit der abgerundeten Form des Oberschenkels an. Das Kissen bildet nun eine formkomplementäre Verbindung mit dem Oberschenkel. Dieser Formschluss sorgt für einen ausreichend großen Halt des Gegenstandes auf dem Oberschenkel.

Vorteilhafterweise ist in dem Verbindungsbereich wenigstens eine Verbindungsstelle, eine Verbindungsbahn und/oder eine Verbindungsfläche ausgebildet. So ist das Haltekissen beispielsweise lediglich an einer Verbindungsstelle an dem Tragabschnitt angenäht, angeklebt, angenietet oder auf eine sonstige Weise fest mit diesen verbunden. Dabei ist der Tragabschnitt beispielsweise aus einem formstabilen Material hergestellt, das von einem textilen Flächengebilde als Bezug überzogen ist. Das Haltekissen kann im Rahmen der Erfindung ebenfalls einen Bezug aufweisen, der beispielsweise aus Stoff oder Kunststoff besteht. Im Verbindungsbereich ist beispielsweise der Bezug des Haltekissens mit dem Bezug des Tragabschnittes verbunden. Eine Verbindungsbahn im Verbindungsbereich kann beispielsweise gerade in einer Längsrichtung des Haltekissens verlaufen, so dass die gerade Längsbahn im Wesentlichen parallel zum Oberschenkel des Nutzers ausgerichtet werden kann. Abweichend hiervon ist die Verbindungsbahn gekrümmt. Die Verbindungsbahn kann im Rahmen der Erfindung auch umfänglich geschlossen sein, so dass sie eine Fläche umschließt, die zumindest zu zwei einander gegenüberliegenden Außenrändern des Haltekissens einen ausreichend großen Abstand aufweist, so dass durch ausreichend große Haltekissenrandbereiche eine hinreichende Verformbarkeit des Haltekissen geschaffen ist mit einem ausreichend großem Halt im Gefolge. Die Verbindungsbahn kann oder die Verbindungsbahnen können auch gemäß einem zweckmäßigen Muster verlaufen.

Wie bereits ausgeführt wurde kann das Haltekissen auf beliebige Weise mit dem Tragabschnitt verbunden sein. Wesentlich ist jedoch, dass Haltekissenrandbereiche ausgebildet sind, die zu einer ausreichend leichten Verformung des Haltekissens und somit zu einer ausreichend großen Haltewirkung führen. Dies ist dann erreicht, wenn in einer Draufsicht auf das Haltekissen zwischen der Außenkontur des Haltekissens und dem oder den weiter innen liegenden Verbindungsbereichen ein ausreichend großer Abstand bereitgestellt ist. Ein ausreichend großer Abstand ist beispielsweise bereitgestellt, wenn der Abstand zwischen 2 und 20 Zentimetern beträgt. Mit anderen Worten ist es im Rahmen der Erfindung ausreichend, wenn das Haltekissen unbefestigte Haltekissenrandbereiche aufweist, die eine Breite von wenigstens 2 bis 20 Zentimetern haben. Selbstverständlich ist es auch möglich eine Verbindungsfläche zwischen Haltekissen und Tragabschnitt auszubilden. Eine solche Verbindungsfläche kann beispielsweise entweder durch einen Haken/Ösen oder Klettverschluss bereitgestellt sein. Dabei ist beispielsweise am Haltekissen ein flächiges Klettband als Verhakerungsteil angebracht, das mit einem an der Oberfläche des Tragabschnitts angeordneten Ösenabschnitt mechanisch verhakt werden kann und somit eine lösbare Verbindung zwischen Tragabschnitt und Haltekissen bereitstellt. Die Ecken des Haltekissens sind vorzugsweise abgerundet

Vorteilhafterweise ist das Haltekissen flach ausgebildet. Mit anderen Worten weist das Haltekissen ein Bezug auf, der einander gegenüberliegende Seitenwände aufweist, die über eine Außenwand miteinander verbunden sind. Die Außenwand und somit die Dicke des Kissens liegen zwischen 0,5 Zentimetern und 5 Zentimetern. Die Seitenwände des Haltekissenbezugs sind beispielsweise rechtwinklig ausgebildet, wobei eine Längs- und eine Kurzseite bereitgestellt sind. Die Kurzseite hat beispielsweise eine Breite von 5 bis 20 Zentimeter, wobei die Langseite sich über eine Länge zwischen 7 bis 30 Zentimetern erstreckt.

Es ist zweckmäßig, dass der Bezug so gewählt ist, dass ein so großer Reibungswiderstand zwischen Haltekissen und Auflage erzeugt ist, dass es zu einer Verformung des Haltekissens beim Hin- und Herbewegen auf der Auflage kommt.

Gemäß einer bevorzugten Ausgestaltung der Erfindung weist das Haltekissen einen Bezug auf, der mit einer Füllung befüllt ist, wobei die Füllung aus Festkörperteilchen, Federn, Daunen, Schäumen oder einer Flüssigkeit mit hoher Viskosität besteht. Eine solche Flüssigkeit kann auch als gelartige Flüssigkeit bezeichnet werden. Gemäß dieser Variante der Erfindung ist die Füllung so ausgestaltet, dass diese hinreichend schnell in der Arbeitsstellung die gewünschte zu der Auflage formkomplementäre Konfiguration annimmt, um für die gewünschte Haltewirkung in seitlicher oder mit anderen Worten horizontaler Richtung zu sorgen. Dabei weist die Füllung ein spezifisches Gewicht auf, das ausreichend groß ist, um die erforderliche Haltewirkung bereit zu stellen. Dabei ist das Gewicht der Füllung jedoch nicht so groß, dass die erfindungsgemäße Vorrichtung ein Gesamtgewicht erhält, das den Transport des zu transportierenden Gegenstandes zu beschwerlich machen würde.

Vorteilhafterweise weist die Abdeckung zwei gegeneinander verschwenkbare Stützbereiche auf, wobei Rastmittel zum rutschfesten Verrasten der Abdeckung auf einer vom Haltekissen abgewandten Außenfläche des Tragabschnittes vorgesehen sind. Gemäß dieser vorteilhaften Weiterentwicklung kann die Abdeckung verschwenkt werden, so dass ein keilartiges Widerlager zum Anlegen des Gegenstandes bereitgestellt ist. Hierbei wird die Abdeckung durch die Haltemittel an der das Widerlager bildenden Abdeckung gehalten. Die Rastmittel sind so ausgestaltet, dass der Winkel, den die beiden verschwenkbaren Stützbereiche bezüglich des Knickbereichs miteinander aufspannen, verstellt werden kann. Auf diese Weise können quasi kontinuierliche Betrachtungswinkel auf den Gegenstand, beispielsweise den Bildschirm eines Tablet-PCs, eingestellt werden.

Gemäß einer diesbezüglich zweckmäßigen Weiterentwicklung umfassen die Rastmittel ein mechanisches Verhakungselement, das an der vom Tragabschnitt abgewandten Kante der Abdeckung ausgebildet ist, wobei an der Außenfläche des Tragabschnitts ein formkomplementäres Ösenelement ausgebildet ist. Mit anderen Worten ist an der äußeren Kante der Abdeckung wenigstens abschnittsweise ein Verhakungsteil eines Klettverschlusses vorgesehen. Dieses Verhakungsteil entfaltet eine Haltewirkung an dem formkomplementären Ösenelement, das an der Seite des Tragabschnittes vorgesehen ist, die vom Haltekissen abgewandt ist. Das Ösenelement ist beispielsweise der Bezug des Tragabschnittes, der aus einem beliebigen textilen Flächengebilde wie beispielsweise Velours bestehen kann. Auf diese Art und Weise sind kostengünstige und wirksame Rastmittel bereitgestellt.

Selbstverständlich sind auch hiervon abweichende Rastmittel im Rahmen der Erfindung möglich. So können die Rastmittel beispielsweise elastomere Materialen wie Gummi oder dergleichen aufweisen.

Vorteilhafterweise ist als Haftmittel eine Haftmatte vorgesehen, die an einer in der Transportstellung dem Tragabschnitt zugewandten Befestigungsseite der Abdeckung angeordnet ist, wobei die Haftmatte eine Glattflächenhaftschicht, die zum lösbaren Haften an glatten Oberflächen eingerichtet ist, und eine Zusatzhaftschicht aufweist, die flächig mit der Glattflächenhaftschicht verbunden ist und an textilen Flächengebilden oder magnetisierbaren Oberflächen eine lösbare Haftwirkung entfaltet. Die Haftmatte kann somit beispielsweise an dem Stoffbezug der Abdeckung mit ihrer Zusatzhaftschicht angelegt werden und so eine lösbare Verbindung mit der Abdeckung eingehen. Die Glattflächenhaftschicht dient zur Bereitstellung einer lösbaren mechanischen Bindung mit dem zu transportierenden bzw. zu haltenden Gegenstand. Dieser weist in der Regel eine glatte Fläche auf, die beispielsweise die Rückseite des Tablet-PCs ist. Auf diese Art und Weise ist eine auch insgesamt lösbare Verbindung zwischen Gegenstand und Abdeckung bereitgestellt.

Zweckmäßigerweise ist das Haltekissen durch lösbare Bindungsmittel an dem Tragabschnitt befestigt. Die lösbare Verbindung ermöglicht eine vereinfachte Reinigung des Haltekissens oder der gesamte Vorrichtung.

Zweckmäßiger Weise sind Verschlussmittel zum Fixieren der Abdeckung an der Tragseite in der Transportstellung vorgesehen. Solche Verschlussmittel sind beispielsweise ein einfacher Reißverschluss, ein elastisches Band oder eine Lasche, die über eine Druckknopfverbindung den notwendigen Halt der Abdeckung in der geschlossenen Transportstellung an dem Tragabschnitt bereitstellt.

Zweckmäßigerweise ist der Abstand größer als 2 cm und insbesondere größer als 5 cm. Die Breite den Haltekissenrandbereiche ist dann natürlich ebenfalls größer als 2 cm beziehungsweise 5 cm. Es hat sich herausgestellt, dass diese geometrische Beschränkung einen guten Kompromiss zwischen einem möglichst hohem Seitenhalt und einem möglichst geringen Gesamtgewicht der Vorrichtung ergibt.

Weitere zweckmäßige Ausgestaltungen und Vorteile der Erfindung sind Gegenstand der nachfolgenden Beschreibung von Ausführungsbeispielen der Erfindung unter Bezug auf die Figuren der Zeichnung, wobei gleiche Bezugszeichen auf gleich wirkende Bauteile verweisen und wobei
- Figur 1: ein Ausführungsbeispiel der erfindungsgemäßen Vorrichtung in einer Expositionsansicht,
- Figur 2: das Ausführungsbeispiel gemäß Figur 1 in einer perspektivischen Ansicht,
- Figur 3: das Verschwenken der Vorrichtung gemäß Figur 1 oder 2 ,
- Figur 4: das Verstellen der Abdeckung der Vorrichtung gemäß Figur 1,
- Figur 5: das Abstellen der Vorrichtung gemäß Figur 1 in seiner Arbeitsstellung auf dem Bein eines Benutzers verdeutlichen und
- Figur 6: die Vorrichtung gemäß Figur 1 zeigen, kurz bevor diese ihre Transportstellung erreicht.

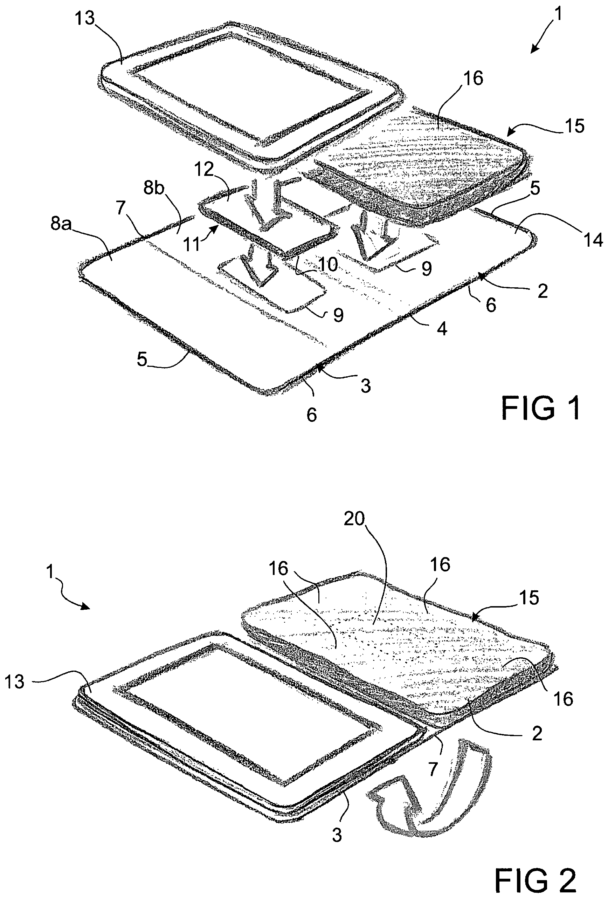

Figur 1 zeigt ein Ausführungsbeispiel der erfindungsgemäßen Vorrichtung 1 in einer Expositionsdarstellung. Es ist erkennbar, dass die Vorrichtung 1 einen Tragabschnitt 2 sowie eine Abdeckung 3 aufweist, die an einer Schwenkseite 4 schwenkbar miteinander verbunden sind. Dabei sind Tragabschnitt 2 und Abdeckung 3 einander entsprechend in dem Sinne ausgestaltet, dass sie jeweils eine gleich lange Längsseite 6 sowie eine gleich lange Schmalseite 5 aufweisen. Tragabschnitt 2 und Abdeckung 3 sind aus einem formstabilen Kunststoff gefertigt und in dem gezeigten Ausführungsbeispiel in einem gemeinsamen Bezug aus Stoff hier Velours angeordnet. Anstatt eines Stoffbezugs kann im Rahmen der Erfindung jedoch auch jeder sonstige Bezug eingesetzt werden.

Ferner ist erkennbar, dass die Abdeckung 3 durch eine Knickverbindung 7 in zwei Stützbereiche 8a und 8b unterteilt sind. Auf dem Stützbereich 8b ist ein Klettband 9 erkennbar, der ein so genanntes Ösenelement für ein mit diesem wechselwirkendes Widerhakenelement 10 ausbildet, das Teil einer Haftmatte 11 ist. Das Widerhakenelement 10 ist an der in der Figur 1 nach unten zeigenden Seite der Haftmatte 11 angeordnet. Die Haftmatte 11 weist darüberhinaus einen Glattflächenhaftabschnitt 12 aus Polyurethan auf, der an einer glatten Außenfläche eines Tablet PCs 13 lösbar und mit einer solchen Haftwirkung haftet, dass durch die Vorrichtung 1 eine sichere Halterung eines Tablet-PCs 13 ermöglicht ist. Wie durch die Pfeile in Figur 1 angedeutet ist, kann der Tablet-PC 13 durch die Haftmatte 11 am Stützbereich 8b der Abdeckung 3 lösbar befestigt werden.

Der Tragabschnitt 2 weist an seiner Innenseite 14 ebenfalls ein Klettband 9 in Gestalt eines Ösenelementes eines Klettverschlusses auf, das mit einem an einem Haltekissen 15 angeordneten Widerhakenelement des Klettverschlusses verbunden ist. Das am Haltekissen 15 befestigte Widerhakenelement ist unter dem Haltekissen angeordnet und daher nicht figürlich dargestellt. Es weist jedoch die gleiche Fläche auf wie das in Figur 1 erkennbare Klettband 9. Somit ist die Fläche des Verbindungsbereichs, der durch die Überlagerung zwischen Klettband 9 und dem Widerhakenelement des Haltekissens 15 definiert ist, wesentlich kleiner als die Oberfläche des Haltekissens 15, die auf seinen beiden Seiten gleich groß ist. Der in diesem Sinne kleiner Verbindungsbereich ist mittig an dem Haltekissen 15 angeordnet. Das Haltekissen 15 bildet somit frei an dem Tragabschnitt 2 hängende Haltekissenrandbereiche 16 auf, die sich in dem in Figur 1 gezeigten Ausführungsbeispiel kranzartig geschlossen um den Klettabschnitt 9 herum erstrecken.

Figur 2 zeigt das Ausführungsbeispiel gemäß Figur 1 in einer Stellung, in welcher der Tablet-PC 13 und das Haltekissen 15 mit dem Tragabschnitt 2 bzw. der Abdeckung 3 verbunden sind. Durch den Pfeil ist in Figur 2 weiterhin die Verschwenkbarkeit der beiden Abschnitte angedeutet. Der unter dem Haltekissen 15 ausgebildete Verbindungsbereich 20 ist durch eine gestrichelte Linie verdeutlicht.

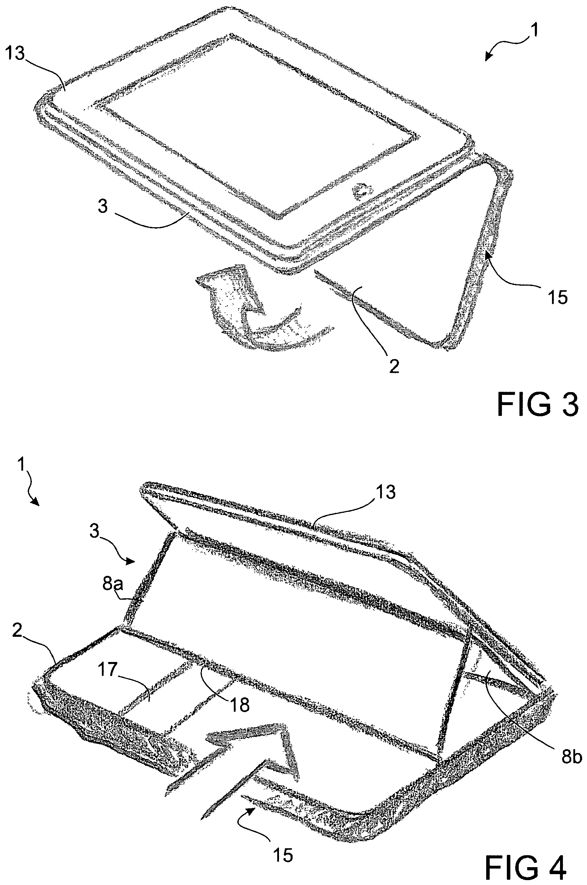

Figur 3 zeigt die Vorrichtung 1 gemäß Figur 1 kurz bevor diese in ihre Arbeitsstellung überführt ist.

In Figur 4 ist die Arbeitsstellung der Vorrichtung 1 erreicht, wobei die Vorrichtung 1 jedoch auf einer figürlich nicht dargestellten flächigen Auflage, wie beispielsweise einem Tisch, abgestellt ist. Es ist erkennbar, dass in der dort gezeigten Arbeitsstellung das Haltekissen 15 unterhalb des Tragabschnittes 2 angeordnet ist. Dabei ist das Haltekissen 15 an der von den Haltemitteln 12 abgewandten Seite des Tragabschnitts 2 angeordnet. Ferner ist erkennbar, dass der Tragabschnitt 2 ebenfalls ein Klettband 17 ausbildet, das an seiner vom Haltekissen 15 abgewandten Seite angeordnet ist. Dabei erstreckt sich das Klettband 17 als Ösenelement von einer Kante, die von der Abdeckung abgewandt ist, zu der Kante, die mit der Abdeckung 3 verbunden ist. Zum Aufstellten des Tablet-PCs 13 sind die Stützbereiche 8a und 8b der Abdeckung 3 gegeneinander verschwenkt, wobei die Stützbereiche 8a und 8b bezüglich der Knickverbindung 7 miteinander einen spitzen Winkel aufspannen.

Um die Abdeckung 3 in der in der Figur 4 gezeigten Stellung zu halten, dient ein im Kantenbereich 18 des Stützbereichs 8a angeordnetes Verhakungselement 18. Wird das Verhakungselement 18 in Kontakt mit dem Ösenelement 17 gebracht, greifen die Widerhaken des Verhakungselements in die Ösen des Ösenelementes ein, so dass es zu einer lösbaren mechanischen Verbindung zwischen der winkeligen Abdeckung 3 und dem flach liegenden Tragabschnitt 2 kommt. Mit dem Klettband 17 und dem Verhakungselement des Abstützbereichs 18 sind somit Rastmittel ausgebildet, mit denen eine Stabilisierung oder Halterung der Abdeckung 3 in der in Figur 4 gezeigten Stellung ermöglicht ist. Die lösbaren Rastmittel ermöglichen dem Nutzer eine beliebige Veränderung des von den Stützbereichen 8a, 8b aufgespannten Winkels und somit eine kontinuierliche Einstellung der Schräglage des Tablet PCs.

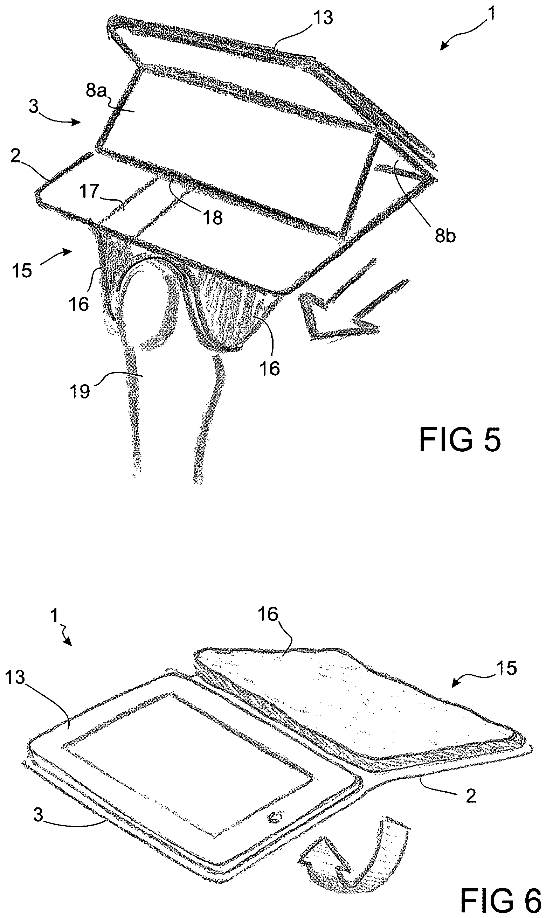

Figur 5 zeigt das Ausführungsbeispiel gemäß Figur 4, wobei die Vorrichtung jedoch auf einem nur schematisch dargestellten Oberschenkel 19 als Auflage abgestellt ist. Dabei ist die Vorrichtung 1 so bezüglich des Oberschenkels 19 ausgerichtet, dass die Haltekissenrandabschnitte 16 des Haltekissens 15 seitlich des Oberschenkels 19 sackartig herunterhängen. Dabei liegen Haltekissenrandabschnitte 16 zunächst locker an den Seiten des Oberschenkels an. Um den notwendigen seitlichen oder mit anderen

Worten horizontalen Halt bereit zu stellen, wird die Vorrichtung 1 in der in Figur 5 durch den Pfeil angedeuteten Richtung auf dem Oberschenkel 19 hin- und herbewegt. Dabei legt sich das Haltekissen 15 formkomplementär an den Oberschenkel 19 des Nutzers an. Durch diesen Formschluss wird ein so großer Halt bereit gestellt, dass ein Nutzer beide Hände für Eingaben an dem Tablet-PC einsetzen kann. Das Haltekissen 15 weist einen Bezug aus Velours auf, der mit so genannten PP-Perlen als Festkörperteilchen befüllt ist.

Figur 6 zeigt die Vorrichtung gemäß Figur 1, kurz bevor diese ihre Transportstellung erreicht. Es wird erkennbar, dass in der Transportstellung der Tablet-PC 13 mittels der in Figur 1 gezeigten Haftmatte 11 an der Abdeckung 3 befestigt ist und gleichzeitig flächig an dem Haltekissen 15 anliegt. Das Haltekissen 15 stellt in der Transportstellung somit ein Poster da, das den Tablet-PC gegenüber mechanischen Stößen schützt.

## Patentansprüche

1. Vorrichtung (1) zum Transport und Halten von Gegenständen (13) mit
- einem Tragabschnitt (2),
- einem an dem Tragabschnitt (2) zwischen einer Transport- und Arbeitsstellung der Vorrichtung (1) schwenkbar befestigten Abdeckung (3) und
- Haltemitteln (11) zum Halten des Gegenstandes (13) an der Abdeckung (3), **gekennzeichnet durch**
- ein an dem Tragabschnitt (2) befestigtes Haltekissen (15), das in der Transportstellung innerhalb einer aus Tragabschnitt (15) und Abdeckung (3) gebildeten Tasche und in der Arbeitsstellung unterhalb des Tragabschnittes (2) angeordnet ist, wobei
- das Haltekissen (15) wenigstens einen Verbindungsbereich (20) aufweist, mit dem das Haltekissen (15) an dem Tragabschnitt (2) befestigt ist, wobei jeder Verbindungsbereich (20) mit einem so großen Abstand zu einander gegenüberliegenden Seiten der Außenkontur des Haltekissens (15) angeordnet ist, dass an dem Tragabschnitt (2) sackartig befestigte Haltekissenrandbereiche (16) ausgebildet sind.

2. Vorrichtung (1) nach Anspruch 1, **dadurch gekennzeichnet, dass** das Haltekissen (15) leicht verformbar ist und sich in der Arbeitsstellung beim Abstellen der Vorrichtung (1) auf eine Auflage in Folge einer Bewegung formkomplementär an die Auflage anlegt, so dass eine formschlüssige Verbindung zwischen Auflage und Haltekissen bereit gestellt ist.

3. Vorrichtung (1) nach Anspruch 1 oder 2, **dadurch gekennzeichnet, dass** im Verbindungsbereich (20) wenigstens eine Verbindungsstelle, eine Verbindungsbahn und/oder eine Verbindungsfläche ausbildet ist/sind.

4. Vorrichtung (1) nach einem der vorhergehenden Ansprüche, **dadurch gekennzeichnet, dass** das Haltekissen (15) flach ausgebildet ist.

5. Vorrichtung (1) nach einem der vorhergehenden Ansprüche, **dadurch gekennzeichnet, dass** das Haltekissen (15) einen Bezug aufweist, der mit einer Füllung befüllt ist, wobei die Füllung aus Festkörperteilchen, Federn, Daunen, Schäumen oder einer Flüssigkeit mit hoher Viskosität besteht.

6. Vorrichtung (1) nach einem der vorhergehenden Ansprüche, **dadurch gekennzeichnet, dass** die Abdeckung (3) zwei gegeneinander verschwenkbare Stützbereiche (8a, 8b) aufweist, wobei Rastmittel (17,18) zum rutschfesten Verrasten der Abdeckung (3) auf einer vom Haltekissen (15) abgewandten Außenfläche des Tragabschnittes (2) vorgesehen sind.

7. Vorrichtung (1) nach Anspruch 6, **dadurch gekennzeichnet, dass** die Rastmittel ein mechanisches Verhakungselement (18) umfassen, das an der vom Tragabschnitt abgewandten Kante der Abdeckung (3) ausgebildet ist, wobei an der Außenfläche des Tragabschnittes (2) ein Ösenelement (17) ausgebildet ist.

8. Vorrichtung (1) nach einem der vorhergehenden Ansprüche, **dadurch gekennzeichnet, dass** als Haltemittel eine Haftmatte (11) vorgesehen ist, die an einer in der Transportstellung dem Tragabschnitt (2) zugewandten Befestigungsseite der Abdeckung (3) angeordnet ist, wobei die Haftmatte (11) eine Glattflächenhaftschicht (12), die zum lösbaren Haften an glatten Oberflächen eingerichtet ist, und eine Zusatzhaftschicht (10) aufweist, die flächig mit der Glattflächenhaftschicht verbunden ist und an textilen Flächengebilden (9) oder magnetisierbaren Oberflächen eine lösbare Haltewirkung entfaltet.

9. Vorrichtung (1) nach einem der vorhergehenden Ansprüche, **dadurch gekennzeichnet**, das Haltekissen (15) durch lösbare Verbindungsmittel an dem Tragabschnitt befestigt ist.

10. Vorrichtung (1) nach einem der vorhergehenden Ansprüche, **gekennzeichnet durch** Verschlussmittel zum Fixieren der Abdeckung (3) an dem Tragabschnitt (2) in der Transportstellung.

11. Vorrichtung (1) nach einem der vorhergehenden Ansprüche, **dadurch gekennzeichnet, dass** der Abstand größer als 2 cm und insbesondere größer als 5 cm ist.

## Claims

1. Arrangement (1) for transporting and retaining articles (13), having
- a carrying portion (2),
- a covering (3), which is fastened on the carrying portion (2) such that it can be pivoted between a transporting position and a working position of the arrangement (1), and
- retaining means (11) for retaining the article (13) on the covering (3),
**characterized by**
- a retaining pad (15), which is fastened on the carrying portion (2) and, in the transporting position, is arranged within a pocket formed from the carrying portion (15) and covering (3) and, in the working position, is arranged beneath the carrying portion (2), wherein
- the retaining pad (15) has at least one connecting region (20), by means of which the retaining pad (15) is fastened on the carrying portion (2), wherein each connecting region (20) is spaced apart from mutually opposite sides of the outer contour of the retaining pad (15) by such a distance as to form peripheral retaining-pad regions (16) which are fastened in a bag-like manner on the carrying portion (2).

2. Arrangement (1) according to Claim 1, **characterized in that** the retaining pad (15) is readily deformable and in a working position, as a result of the arrangement (1) being set down on an underlying surface, positions itself on the underlying surface with shaping to complement the same, and therefore a form-fitting connection is established between the underlying surface and retaining pad.

3. Arrangement (1) according to Claim 1 or 2, **characterized in that** at least one connecting location, one connecting track and/or one connecting surface are/is formed in the connecting region (20).

4. Arrangement (1) according to one of the preceding claims, **characterized in that** the retaining pad (15) is of flat design.

5. Arrangement (1) according to one of the preceding claims, **characterized in that** the retaining pad (15) has a cover which is filled with a filling, wherein the filling consists of solid particles, feathers, down, foams or a high-viscosity liquid.

6. Arrangement (1) according to one of the preceding claims, **characterized in that** the covering (3) has two supporting regions (8a, 8b) which can be pivoted in relation to one another, wherein latching means (17, 18) are provided for latching the covering (3) in a non-slip manner on an outer surface of the carrying portion (2), said outer surface being directed away from the retaining pad (15).

7. Arrangement (1) according to Claim 6, **characterized in that** the latching means comprise a mechanical hooking-action element (18), which is formed on that edge of the covering (3) which is directed away from the carrying portion, wherein an eyelet element (17) is formed on the outer surface of the carrying portion (2).

8. Arrangement (1) according to one of the preceding claims, **characterized in that** the retaining means provided is an adhesion mat (11), which is arranged on a fastening side of the covering (3), said fastening side being directed towards the carrying portion (2) in the transporting position, wherein the adhesion mat (11) has a smooth-surface-adhesion layer (12), which is designed for releasable adhesion to smooth surfaces, and an additional adhesion layer (10) which is connected to the smooth-surface-adhesion layer with surface contact and establishes a releasable retaining action in respect of textile fabrics (9) or magnetizable surfaces.

9. Arrangement (1) according to one of the preceding claims, **characterized in that** the retaining pad (15) is fastened on the carrying portion by releasable connecting means.

10. Arrangement (1) according to one of the preceding claims, **characterized by** closure means for fixing the covering (3) on the carrying portion (2) in the transporting position.

11. Arrangement (1) according to one of the preceding claims, **characterized in that** the distance is greater than 2 cm and, in particular, greater than 5 cm.

## Revendications

1. Ensemble (1) de transport et de maintien d'objets (13), présentant:
- une section de support (2),
- un recouvrement (3) fixé sur la section de support (2) de manière à pouvoir pivoter entre la position de transport et la position de travail de l'ensemble (1) et
- des moyens de maintien (11) qui maintiennent l'objet (13) sur le recouvrement (3),
**caractérisé par**
- un coussin de maintien (15) fixé sur la section de support (2) et disposé dans la position de transport à l'intérieur d'une poche formée de la section de support (15) et du recouvrement (3) et disposé dans la position de travail en dessous de la section de support (2),
- le coussin de maintien (15) présentant au moins une partie de liaison (20) par laquelle le coussin de maintien (15) est fixé sur la section de support (2), chaque partie de liaison (20) étant disposée à une distance des côtés mutuellement opposés du contour extérieur du coussin de maintien (15) suffisamment grande pour que des parties de bord (16) de coussin de maintien fixées en forme de sac sur la partie de support (2) soient formées.

2. Ensemble (1) selon la revendication 1, **caractérisé en ce que** le coussin de maintien (15) est aisément déformable et **en ce qu'**en position de travail, lors du dépôt de l'ensemble (1) sur une base suite à un déclenchement, il épouse le support en complémentarité de forme de manière à établir une liaison en correspondance géométrique entre le support et le coussin de maintien.

3. Ensemble (1) selon les revendications 1 ou 2, **caractérisé en ce qu'**au moins un emplacement de liaison, une piste de liaison et/ou une surface de liaison sont formées dans la partie de liaison (20).

4. Ensemble (1) selon l'une des revendications précédentes, **caractérisé en ce que** le coussin de maintien (15) est plat.

5. Ensemble (1) selon l'une des revendications précédentes, **caractérisé en ce que** le coussin de maintien (15) présente un revêtement rempli d'une charge, la charge étant constituée de particules solides, de ressorts, de duvet, de mousse ou d'un liquide à haute viscosité.

6. Ensemble (1) selon l'une des revendications précédentes, **caractérisé en ce que** le recouvrement (3) présente deux parties de soutien (8a, 8b) aptes à pivoter l'une par rapport à l'autre, des moyens d'encliquetage (17, 18) permettant un encliquetage anti-glissement du recouvrement (3) sur une surface extérieure de la section de support (2) non tournée vers le coussin de maintien (15) étant prévus.

7. Ensemble (1) selon la revendication 6, **caractérisé en ce que** les moyens d'encliquetage comprennent un élément mécanique en crochet (18) formé sur le bord de recouvrement (3) non tourné vers la partie section de support, un élément en oeillet (17) étant formé sur la surface extérieure de la section de support (2).

8. Ensemble (1) selon l'une des revendications précédentes, **caractérisé en ce que** comme moyen de maintien est prévu un tapis adhérent (11) qui est disposé sur un côté de fixation de recouvrement (3) tourné dans la position de transport vers la section de support (2), le tapis adhérent (11) présentant une couche (12) adhérant aux surfaces lisses, conçue pour adhérer de manière libérable à des surfaces lisses, et une couche adhérente supplémentaire (10) reliée sur toute sa surface à la couche adhérant aux surfaces lisses et développe un effet de maintien libérable sur des produits textiles plats (9) ou des surfaces magnétisables.

9. Ensemble (1) selon l'une des revendications précédentes, **caractérisé en ce que** le coussin de maintien (15) est fixé sur la section de support par des moyens de liaison libérables.

10. Ensemble (1) selon l'une des revendications précédentes, **caractérisé par** des moyens de fermeture pour la fixation du recouvrement (3) sur la section de support (2) en position de transport.

11. Ensemble (1) selon l'une des revendications précédentes, **caractérisé en ce que** la distance est supérieure à 2 cm et en particulier supérieure à 5 cm.
